# EUROPEAN PATENT SPECIFICATION

(11) **EP 2 444 220 B1**
(45) Date of publication and mention of the grant of the patent: **07.05.2014**
(21) Application number: 11185987.2
(22) Date of filing: 20.10.2011
(51) Int. Cl.: B29C 67/20, B01D 53/26, B29C 35/04

(54) **Plant for the production of articles made of polymer material, plastic or similar, and relative method**
Anlage zur Herstellung von Gegenständen, die aus polymerem Material, Kunststoff oder ähnlichem hergestellt sind, und entsprechendes Verfahren
Installation de la production des articles fabriqués en matériau polymère, plastique ou similaire, et procédé associé

(30) Priority: 21.10.2010 IT UD20100190
(43) Date of publication of application: 25.04.2012
(73) Proprietor: Tecnodinamica S.r.l., 31020 Farra di Soligo (TV) (IT)
(72) Inventor: Selvestrel, Giampietro, 31050 Campea di Miane (TV) (IT)
(74) Representative: Petraz, Gilberto Luigi

(56) References cited:
- EP-A1- 2 221 482
- EP-A2- 0 259 597
- DE-A1-102008 016 883
- DE-C1- 3 821 410
- US-A- 5 858 288
- US-A1- 2009 229 279

## Description

### FIELD OF THE INVENTION

The present invention concerns a plant and the relative method for the production of articles made of polymer material, plastic or similar, for example expanded polystyrene. In particular the plant is advantageously applied, but not only, on apparatuses such as blockmaking machines or printers, used to make blocks of expanded polystyrene having shapes and dimensions which are variable both in height and in depth.

### BACKGROUND OF THE INVENTION

Apparatuses to make articles in polymer material are known, associated with devices to generate and introduce saturated steam, with temperatures varying between 110°C and 120°C, in order to sinter the polystyrene, and with systems to cool the articles in order to reduce the formation of condensation and to speed up the process of extracting the article.

A cooling mode is known in which the apparatuses are made to operate in vacuum conditions, so as to extract a stream of hot, damp air from them.

Moreover, a cooling plant is known which comprises a cooling tower and a compressor for generating the vacuum in a depression tank.

In particular, the compressor generates a high vacuum condition inside the tank which, being directly connected to the apparatus, takes in the stream of hot, damp air from the apparatus. Because of the depression, the stream of hot air passes through the tank and is subsequently discharged into the environment.

The cooling tower, by means of water circulation, provides to cool the tank and therefore the stream of hot, damp air which passes through it. There is therefore a reduction in the temperature of the stream in the tank with subsequent deposit of the condensation contained therein.

The compressor is of the liquid ring type and, given its particular constructive conformation and the considerable friction generated during the compression of the fluid, it is necessary to associate with to a suitable cooling circuit. The cooling circuit advantageously uses, as a process fluid, the same water as the cooling tower, thus entailing a further increase in the water temperature and therefore a loss of efficiency of the cooling tower itself.

Until now it was advantageous to provide the use of liquid ring compressors because it was the only type which guaranteed an optimum compromise between the level of vacuum obtainable and its efficiency.

It is also known that the heat exchange water of the cooling tower must be adequately pre-treated to avoid the formation of lime scale, which can clog the pipes, and sterilized to prevent the proliferation of micro-organisms.

The thermal head to which the water can be subjected is limited, because this entails cooling towers with rather large volumes and therefore bulky.

Moreover, the variations in temperature of the water due to the variations in the environmental conditions influence the functioning of the plant and therefore also of the liquid ring compressor, modifying their efficiency over time.

A similar plant to the one described above is also known which, instead of providing the use of cooling towers to cool the stream of hot, damp air from the apparatus, uses exchangers of the air/air type. These exchangers are interposed between the apparatus and the tank. The compressor must in any case be cooled using a liquid cooling circuit.

A plant for sintering thermoplastic material is also known from the document EP-A2-0259597, that discloses an apparatus according to the preamble of claim 1 and a method according to the preamble of claim 9.

In this document a method to sinter thermoplastic materials is described in which the material is sintered in a forming chamber which is externally surrounded by peripheral chambers. The peripheral chambers serve to determine a condition of uniform depression inside the forming chamber itself, and are fluidically connected to the forming chamber by means of transpirant walls.

A vacuum pump is connected to the peripheral chambers to generate a vacuum condition which is also distributed in the forming chamber.

The steam introduced into the forming chamber and which exits into the peripheral chambers has a temperature of about 90°C, and is cooled in a cooling chamber associated with a water cooling plant. The cooling chamber is disposed downstream of the peripheral chambers or integrated therein.

The peripheral chambers are in turn connected to a tank which generates a condition of vacuum maintained in depression by the vacuum pump.

The vacuum pump is cooled by water and takes in the stream of steam from the tank which generates a condition of vacuum which in its turn determines a condition of vacuum in the peripheral chambers and hence in the forming chamber.

The stream of steam taken in, still hot, passes directly through the vacuum pump. A cooling plant of the water type is associated with the pump and allows the latter to process the steam at a relatively high temperature.

The plant described in this document is very complex both to make and to manage. In fact it requires both plants to cool the steam exiting from the forming chamber during the sintering step, and also plants to cool the vacuum pump which processes a relatively hot fluid which is taken in before proceeding to the expulsion of the article made are needed. Moreover, such cooling plants are of the liquid type, that is, they use water as the heat exchange fluid, with the consequent disadvantages of having to suitably treat the water as described above.

One purpose of the present invention is to achieve a plant for the production of articles which is simple, with limited costs of managing the plant and having a greater and constant efficiency over time, even in environmental conditions that vary over time

A further purpose of the present invention is to limit, if not eliminate, the use of cooling liquids inside the cooling plant, so as to make it usable also in areas where there is a scarcity of supply of liquids.

A further purpose is to perfect a method for the production of articles which simplifies and increases the efficiency of its steps.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention.

In accordance with the above purpose, a plant for the production of articles made of polymer material, plastic or similar comprises an apparatus for forming them, first introduction means to introduce the material, in the form of raw material, into the apparatus, second introduction means to introduce steam into the apparatus, advantageously but not exclusively at a temperature comprised between about 110°C and about 120°C, removal means to remove a stream of hot, damp air from the apparatus, cooling means able to cool both the article and the stream below a determinate temperature threshold, and a tank connected at the exit of the cooling means.

According to a characteristic feature of the present invention, a dry compressor is connected to the tank to generate a vacuum condition inside it, able to take in the stream from the apparatus through the removal means.

The use of the dry compressor avoids the need to provide cooling circuits in which cooling liquids circulate, and thus obviates the need for all the functions linked to the circulation of liquids.

Moreover, in the present invention the cooling means have the function of bringing the temperature of the stream of air entering the dry compressor to a suitable value for the functioning of the latter, without problems connected to the efficiency or other, for example lower than 40°C, advantageously around 30°C.

According to a secondary feature the compressor is of the rotary type, and advantageously of the lobed type.

The Applicant has discovered that, thanks to the lowering of the temperature of the air stream on entering, to at least below 40°C, advantageously around 30°C, given the same processing parameters, there is an increase of about 20-30% in the efficiency of the plant compared to the use of compressors used in the state of the art.

According to a further feature, the cooling means are of the air-air type, that is, they use air as heat exchange fluid with the stream of hot air which is to be cooled. This allows to avoid the use of water as a processing fluid, avoiding complexities connected to its preventative treatment.

According to a variant the use of cooling means of the air-water type is provided, which allow to increase the efficiency of heat exchange compared to other solutions.

According to a further feature, the cooling means comprise a first exchanger and a second exchanger connected to each other in series and respectively between the apparatus and the tank. In this way it is possible to divide the thermal head which can be processed by each exchanger and therefore reduce their overall size, and optimize their efficiency.

In particular, the first exchanger is used to condense the humidity contained in the air stream, while the second is used to cool the condensed liquid.

Each of the two exchangers is able to reduce the temperature of the stream of air by a range comprised between 25°C and 35°C, advantageously about 30°C.

The present invention also concerns the respective method.

In particular, the compressor generates a vacuum condition inside the tank to take in the stream of hot, damp air from the apparatus and make the stream flow through the cooling means, disposed between the apparatus and the tank, and to discharge the stream of air through the compressor.

The cooling means reduce the temperature of the stream of hot, damp air exiting from the apparatus to a value suitable to make the dry compressor function efficiently without problems connected to losses by blow-bys or other.

The compressor reduces the pressure in the tank to a pressure comprised between 100mbar and 200mbar, preferably to a value of about 150mbar.

### BRIEF DESCRIPTION OF THE DRAWINGS

These and other characteristics of the present invention will become apparent from the following description of a preferential form of embodiment, given as a non-restrictive example with reference to the attached drawings wherein:

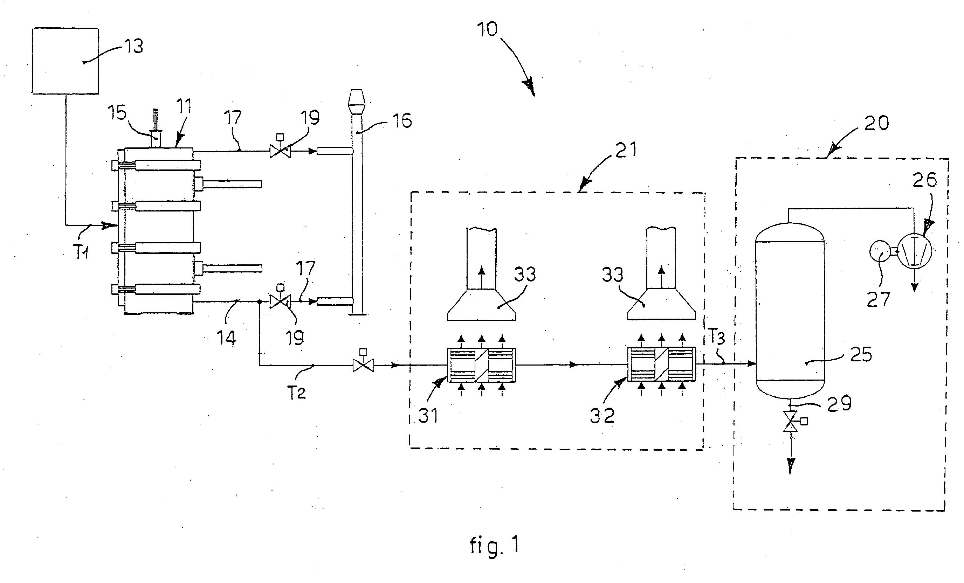

- fig 1 is a schematic representation of the plant for the production of articles made from polymer material according to the present invention.
It is understood that elements and characteristics of one form of embodiment can conveniently be incorporated into other forms of embodiment without further clarifications.

### DETAILED DESCRIPTION OF A PREFERENTIAL FORM OF EMBODIMENT

A plant 10 (fig. 1) for the production of articles made of polymer material according to the present invention comprises an apparatus 11, such as a blockmaking machine, for their production. The apparatus 11 is of any known type and therefore not described hereafter.

The apparatus 11 is associated, in a known manner, with loading means for loading polystyrene and vaporization means 13 to introduce saturated vapor at a temperature higher than 100°C, in order to sinter the expanded polystyrene.

The loading plant provides to inject the polystyrene through an introduction channel 15, whereas the vaporization plant 13 is associated with capillary pipes, not visible in the drawings and disposed inside the walls of the apparatus 11, for the introduction of the steam.

A chimney 16 to discharge the steam is connected, in known modalities, by means of pipes 17 to the apparatus 11, and safety valves 19 of the pipes 17 are driven when there is a breakdown condition in order to discharge the sintering steam through the the chimney 16, and prevent problems of overheating.

The plant 10 according to the present invention comprises a vacuum generation device 20 and cooling means 21 interposed between the vacuum generation device 20 and the apparatus 11, by means of removal means 14, in this case a pipe.

The vacuum generation device 20 comprises a tank 25 and a compressor 26 which, taking in air, generates a depression inside the tank 25 up to a value approximate to a vacuum, which, to give an example, is about 150mbar.

The function of the tank 25 is to make the action of depression uniform inside the plant 10, preventing the onset of pressure peaks due to the cyclical compression of the compressor 26.

A condensation discharge tube 29 of the humidity contained in the damp air stream is mounted on the bottom of the tank 25, in a known manner, in order to discharge the condensation.

The water discharged through the condensation discharge tube 29 can be recovered, pre-treating it, to be re-used by the vaporization plant 13.

The compressor 26 is of the lobed rotary type, and in particular its rotating parts are made of materials which are highly resistant to high temperatures, and with very strict coupling tolerances such as to limit pressure losses due to play with its fixed parts.

The particular stratagems used in the production of this compressor allow it to be used even with operating temperatures near to 100°C-150°C without needing water cooling plants as was necessary in the state of the art.

The compressor 26 is advantageously driven by a motor 27 of the electric type and the stream of processed damp air passes through the whole fluid-dynamic circuit, and is discharged directly into the environment.

The cooling means 21 comprise, in this case, respectively, a first exchanger 31 and a second exchanger 32 of the air-air type connected to each other in series and in particular, the first is directly connected to the apparatus 11 whilst the second is directly connected to the tank 25.

Their connection in series allows to reduce the temperature of the hot, damp air stream which is taken in by the apparatus 11, toward the vacuum generation device 20, from an exit temperature T2 from the apparatus 11 of about 80°C-90°C, to a temperature T3 lower than 40°C, advantageously 30°C. As an example, both the first 31 and the second 32 exchangers each manage to make a thermal head of about 25-30°C.

The cooling means 21 allow to obtain a much lower temperature at entrance to the tank 25 compared with that reached in the state of the art. This allows the compressor 26 to process a stream of fluid at a suitable temperature to guarantee a high level of functioning efficiency. Indeed the higher the temperatures of the fluid which is processed, the more difficult it is for the compressor to reach the desired vacuum condition. Moreover, with lower temperatures of the fluid it is possible to further reduce the losses through blow-bys which occur during the compression steps in the compressor 26. In this way, reducing the temperature of the fluid to below 40°C it is possible to increase the efficiency of the compressor, which can reach more quickly and easily the desired vacuum condition in the tank. This also allows to reduce the absorption of energy of the compressor.

According to an advantageous form of embodiment, the air used for the heat exchange in the first 31 and in the second 32 exchanger is reused by conveying it, by means of recovery pipes 33 in proximity to storage silos of the raw material, for its maturation or for the evaporation of humidity incorporated in the article.

In another form of embodiment the air used for the heat exchange can be reused by conveying it into proximity to the storage places for the articles, in order to provide for their stabilization.

The method according to the present invention is described hereafter.

The compressor 26 takes in air from the tank 25 and generates a vacuum condition therein, which allows to take it into depression and therefore to take in the stream of hot, damp air from the apparatus 11 through the pipe 14.

The stream of hot, damp air passes through the first exchanger 31 and the second exchanger 32 and is subsequently discharged by the compressor 26 making it pass through the tank 25.

By reducing the temperature and the pressure there is also the condensation of the humidity contained in the stream of air taken in, which is deposited on the bottom of the tank 25 and is discharged through the discharge pipe 26.

It is clear that modifications and/or additions of parts may be made to the plant for the production of articles made of polymer material and the relative method as described heretofore, without departing from the field and scope of the present invention.

It is also clear that, although the present invention has been described with reference to some specific examples, a person of skill in the art shall certainly be able to achieve many other equivalent forms of plant and relative method for the production of articles made of polymer material, having the characteristics as set forth in the claims and hence all coming within the field of protection defined thereby.

## Claims

1. Plant for the production of articles made of polymer material, plastic or similar, comprising an apparatus (11) for forming said articles, first introduction means (15), to introduce said material into said apparatus (11), second introduction means (13) to introduce steam into said apparatus (11), removal means (14) to remove a stream of hot, damp air from said apparatus (11), cooling means (21) and a tank (25), **characterized in that** said tank (25) is directly connected to the exit of said cooling means (21), **in that** said cooling means (21) are connected downstream of said removal means (14) to cool said stream of hot, damp air exiting from said apparatus (11) for forming products, and **in that** a dry compressor (26), that is, one that does not need to use cooling liquids, is connected directly downstream of said tank (25) in order to generate inside it a vacuum condition, able to take in said stream from said apparatus (11) through said removal means (14), and then passing through said cooling means (21), said cooling means (21) being configured to bring the temperature of said stream to a value (T3) suitable for the functioning of said dry compressor (26) and at least equal to or below 40°C.

2. Plant as in claim 1, **characterized in that** said compressor (26) is of the rotary type.

3. Plant as in claim 2, **characterized in that** said compressor (26) is of the lobed type.

4. Plant as in any claim hereinbefore, **characterized in that** said cooling means (21) comprise one or more heat exchange devices (31, 32).

5. Plant as in claim 4, **characterized in that** said heat exchange devices (31, 32) provide air as the heat exchange fluid of the stream of warm, damp air.

6. Plant as in claim 4 or 5, **characterized in that** said heat exchange devices comprise a first exchanger (31) and a second exchanger (32) connected to each other in series and respectively the first exchanger (31) connected to the apparatus (11) and the second exchanger (32) connected to the tank (25).

7. Plant as in any claim hereinbefore, **characterized in that** said stream exiting from said apparatus (11) has an exit temperature (T2) comprised between 80°C and 90°C.

8. Plant as in any claim hereinbefore, **characterized in that** said steam at inlet to said apparatus (11) has an inlet temperature (T1) comprised between 110°C and 120°C.

9. Method to produce articles made of polymer material, plastic or similar, using an apparatus (11) in which said articles are formed, first introduction means (15) to introduce said material into said apparatus (11), second introduction means (13) to introduce steam into said apparatus (11), removal means (14) to remove a stream of hot, damp air from said apparatus (11), cooling means (21), **characterized in that** it comprises at least an intake step, to take in said stream of hot, damp air from said apparatus (11), in order through said removal means (14), said tank (25) and said cooling means (21), said intake step being carried out by means of a dry compressor (26), that is, one which does not need to use cooling liquids, which generates a vacuum condition in said tank (25) by the intake of said stream from said apparatus (11), and said cooling means (21), during said intake step, cooling said stream of hot, damp air to a suitable temperature value (T3), at least equal to or below 40°C, before the entrance of said fluid in said tank (25) and in said dry compressor (26).

10. Method as in claim 9, **characterized in that** said stream exits from said apparatus (11) at an exit temperature (T2) comprised between 80°C and 90°C.

11. Method as in claim 9 or 10, **characterized in that** in said tank (25) the pressure is taken to between 100mbar and 200mbar, advantageously to 150mbar.

12. Method as in any claim from 9 to 11, **characterized in that** said cooling means (21) comprise respectively a first exchanger (31) and a second exchanger (32), each of which cools said stream by each subjecting it to a thermal head comprised in a range between 25°C and 35°C.

## Patentansprüche

1. Anlage für die Herstellung von Artikeln aus Polymermaterial, Kunststoff oder dergleichen, umfassend eine Vorrichtung (11) zur Ausbildung der Artikel, erste Einführmittel (15) zum Einführen des Materials in die Vorrichtung (11), zweite Einführmittel (13) zum Einführen von Wasserdampf in die Vorrichtung (11), Ausführmittel (14) zum Ausführen eines Stroms heißer, feuchter Luft aus der Vorrichtung (11), eine Kühleinrichtung (21) und einen Tank (25), **dadurch gekennzeichnet, dass** der Tank (25) mit dem Ausgang der Kühleinrichtung (21) direkt verbunden ist, dass die Kühleinrichtung (21) dem Ausführmittel (14) nachgeschaltet ist, um den Strom heißer, feuchter Luft zu kühlen, der aus der Vorrichtung (11) zur Ausbildung von Produkten austritt, und dass ein Trockenverdichter (26), das heißt einer, der keine Kühlflüssigkeiten braucht, dem Tank (25) direkt nachgeschaltet ist, um in ihm einen Unterdruckzustand zu erzeugen, der dazu fähig ist, den Strom von der Vorrichtung (11) durch die Ausführmittel (14) aufzunehmen und dann durch die Kühleinrichtung (21) zu leiten, wobei die Kühleinrichtung (21) dazu konfiguriert ist, die Temperatur des Stroms auf einen Wert (T3) zu bringen, der für das Funktionieren des Trockenverdichters (26) geeignet und mindestens kleiner oder gleich 40°C ist.

2. Anlage gemäß Anspruch 1, **dadurch gekennzeichnet, dass** der Verdichter (26) ein Rotationsverdichter ist.

3. Anlage gemäß Anspruch 2, **dadurch gekennzeichnet, dass** der Verdichter (26) ein Drehkolbenverdichter ist.

4. Anlage gemäß einem der vorhergehenden Ansprüche, **dadurch gekennzeichnet, dass** die Kühleinrichtung (21) eine oder mehrere Wärmetauschervorrichtungen (31, 32) umfasst.

5. Anlage gemäß Anspruch 4, **dadurch gekennzeichnet, dass** die Wärmetauschervorrichtungen (31, 32) Luft als Wärmetauschfluid des Stroms warmer, feuchter Luft liefern.

6. Anlage gemäß Anspruch 4 oder 5, **dadurch gekennzeichnet, dass** die Wärmetauschervorrichtungen (31, 32) einen ersten Wärmetauscher (31) und einen zweiten Wärmetauscher (32) umfassen, die in Reihe miteinander verbunden sind und der erste Wärmetauscher (31) mit der Vorrichtung (11) und der zweite Wärmetauscher (32) mit dem Tank (25) verbunden ist.

7. Anlage gemäß einem der vorhergehenden Ansprüche, **dadurch gekennzeichnet, dass** der aus der Vorrichtung (11) austretende Strom eine Austrittstemperatur (T2) hat, die zwischen 80°C und 90°C liegt.

8. Anlage gemäß einem der vorhergehenden Ansprüche, **dadurch gekennzeichnet, dass** der Wasserdampf am Einlass in die Vorrichtung (11) eine Einlasstemperatur (T1) hat, die zwischen 110°C und 120°C liegt.

9. Verfahren zum Herstellen von Artikeln aus Polymermaterial, Kunststoff oder dergleichen unter der Verwendung einer Vorrichtung (11), in der die Artikel ausgebildet werden, erster Einführmittel (15) zum Einführen des Materials in die Vorrichtung (11), zweiter Einführmittel (13) zum Einführen von Wasserdampf in die Vorrichtung (11), Ausführmittel (14) zum Ausführen eines Stroms heißer, feuchter Luft aus der Vorrichtung (11), einer Kühleinrichtung (21), **dadurch gekennzeichnet, dass** es mindestens einen Ansaugschritt umfasst, um durch die Ausführmittel (14) den Tank (25) und die Kühleinrichtung (21) in dieser Reihenfolge den Strom heißer, feuchter Luft von der Vorrichtung (11) anzusaugen, wobei der Ansaugschritt mittels eines Trockenverdichters (26) durchgeführt wird, das heißt eines Verdichters, der keine Kühlflüssigkeiten braucht, der in dem Tank (25) durch das Einsaugen des Stroms von der Vorrichtung (11) einen Unterdruckzustand erzeugt, und die Kühleinrichtung (21) während des Ansaugschritts den Strom heißer, feuchter Luft auf einen geeigneten Temperaturwert (T3) abkühlt, der mindestens kleiner oder gleich 40°C ist, bevor das Fluid in den Tank (25) und in den Trockenverdichter (26) eintritt.

10. Verfahren gemäß Anspruch 9, **dadurch gekennzeichnet, dass** der Strom mit einer Austrittstemperatur (T2) aus der Vorrichtung (11) austritt, die zwischen 80°C und 90°C liegt.

11. Verfahren gemäß Anspruch 9 oder 10, **dadurch gekennzeichnet, dass** in dem Tank (25) der Druck auf einen Wert zwischen 100 mbar und 200 mbar, vorteilhafterweise 150 mbar gebracht wird.

12. Verfahren gemäß einem der Ansprüche 9 bis 11, **dadurch gekennzeichnet, dass** die Kühleinrichtung (21) einen ersten Wärmetauscher (31) und einen zweiten Wärmetauscher (32) umfasst, von denen jeder den Strom kühlt, indem er ihn mit einer Temperatur beaufschlagt, die in einem Bereich zwischen 25°C und 35°C liegt.

## Revendications

1. Usine destinée à la production d'articles constitués d'un matériau polymère, de plastique ou similaire, comprenant un appareil (11) destiné à former lesdits articles, des premiers moyens d'introduction (15), destinés à introduire ledit matériau dans ledit appareil (11), des seconds moyens d'introduction (13) destinés à introduire de la vapeur dans ledit appareil (11), des moyens d'élimination (14) destinés à éliminer un flux d'air humide et chaud dudit appareil (11), des moyens de refroidissement (21) et une cuve (25), **caractérisée en ce que** ladite cuve (25) est directement raccordée à la sortie desdits moyens de refroidissement (21), **en ce que** lesdits moyens de refroidissement sont raccordés en aval desdits moyens d'élimination (14) afin de refroidir ledit flux d'air humide et chaud sortant dudit appareil (11) afin de former des produits, et **en ce qu'**un compresseur à sec (26), à savoir qui n'a pas besoin d'utiliser des liquides de refroidissement, est directement raccordé en aval de ladite cuve (25) afin de générer à l'intérieur de celle-ci une condition de vide, apte à admettre ledit flux en provenance dudit appareil (11) à travers lesdits moyens d'élimination (14), puis passant à travers lesdits moyens de refroidissement (21), lesdits moyens de refroidissement (21) étant configurés pour amener la température dudit flux à une valeur (T3) convenant au fonctionnement dudit compresseur à sec (26) et au moins inférieure ou égale à 40 °C.

2. Usine selon la revendication 1, **caractérisée en ce que** ledit compresseur (26) est de type rotatif.

3. Usine selon la revendication 2, **caractérisée en ce que** ledit compresseur (26) est de type à lobes.

4. Usine selon l'une quelconque des revendications précédentes, **caractérisée en ce que** lesdits moyens de refroidissement (21) comprennent un ou plusieurs dispositifs d'échange de chaleur (31, 32).

5. Usine selon la revendication 4, **caractérisée en ce que** lesdits dispositifs d'échange de chaleur (31, 32) fournissent de l'air en tant que fluide d'échange de chaleur du flux d'air humide tiède.

6. Usine selon la revendication 4 ou 5, **caractérisée en ce que** lesdits dispositifs d'échange de chaleur comprennent un premier échangeur (31) et un second échangeur (32) raccordés l'un à l'autre en série et respectivement le premier échangeur (31) est raccordé à l'appareil (11) et le second échangeur (32) est raccordé à la cuve (25).

7. Usine selon l'une quelconque des revendications précédentes, **caractérisée en ce que** ledit flux sortant dudit appareil (11) a une température de sortie (T2) comprise entre 80 °C et 90 °C.

8. Usine selon l'une quelconque des revendications précédentes, **caractérisée en ce que** ladite vapeur à une entrée vers ledit appareil (11) a une température d'entrée (T1) comprise entre 110 °C et 120 °C.

9. Procédé de production d'articles constitués d'un matériau polymère, de plastique ou similaire, en utilisant un appareil (11) dans lesquels lesdits articles sont formés, des premiers moyens d'introduction (15), destinés à introduire ledit matériau dans ledit appareil (11), des seconds moyens d'introduction (13) destinés à introduire de la vapeur dans ledit appareil (11), des moyens d'élimination (14) destinés à éliminer un flux d'air humide et chaud dudit appareil (11), des moyens de refroidissement (21), **caractérisé en ce qu'**il comprend au moins une première étape d'admission, afin d'admettre ledit flux d'air humide et chaud en provenance dudit appareil (11), dans l'ordre à travers lesdits moyens d'élimination (14), ladite cuve (25) et lesdits moyens de refroidissement (21), ladite étape d'admission étant réalisée au moyen d'un compresseur à sec (26), à savoir qui n'a pas besoin d'utiliser de liquide de refroidissement, qui génère une condition de vide dans ladite cuve (25) par l'admission dudit flux en provenance dudit appareil (11), et lesdits moyens de refroidissement (21), pendant ladite étape d'admission, refroidissant ledit flux d'air humide et chaud à une valeur de température convenable (T3), au moins inférieure ou égale à 40 °C, avant l'entrée dudit fluide dans ladite cuve (25) et dans ledit compresseur à sec (26).

10. Procédé selon la revendication 9, **caractérisé en ce que** ledit flux sort dudit appareil (11) à une température de sortie (T2) comprise entre 80 °C et 90 °C.

11. Procédé selon la revendication 9 ou 10, **caractérisé en ce que** dans ladite cuve (25), la pression est prise entre 100 mbar et 200 mbar, avantageusement à 150 mbar.

12. Procédé selon l'une quelconque des revendications 9 à 11, **caractérisé en ce que** lesdits moyens de refroidissement (21) comprennent respectivement un premier échangeur (31) et un second échangeur (32), chacun desquels refroidit ledit flux en le soumettant chacun à une tête thermique comprise dans une plage entre 25 °C et 35 °C.
